# EUROPÄISCHE PATENTSCHRIFT

(11) **EP 2 487 398 B1**
(45) Veröffentlichungstag und Bekanntmachung des Hinweises auf die Patenterteilung: **15.06.2016**
(21) Anmeldenummer: 12000820.6
(22) Anmeldetag: 08.02.2012
(51) Int. Cl.: F16L 33/08, F16L 33/28, F01P 11/04, F02M 35/10

(54) **Rohr- oder Schlauchanschluss**
Tube or hose connection
Raccordement de tuyau ou de flexible

(30) Priorität: 14.02.2011 DE 102011011168
(43) Veröffentlichungstag der Anmeldung: 15.08.2012
(73) Patentinhaber: AUDI AG, 85045 Ingolstadt (DE)
(72) Erfinder: Ziegler, Ralf, 71726 Benningen (DE)
(74) Vertreter: Lehle, Josef

(56) Entgegenhaltungen:
- WO-A1-96/00646
- DE-A1-102005 034 567
- DE-A1-102007 057 838
- FR-A1- 2 630 808
- US-A- 3 831 954
- US-A- 4 440 424

## Beschreibung

Die Erfindung betrifft einen Rohr- oder Schlauchanschluss gemäß dem Oberbegriff des Anspruchs 9, ein Luftrohr oder einen Luftschlauch gemäß dem Oberbegriff des Anspruchs 1, sowie ein Bauteil mit einem Rohrstutzen gemäß dem Oberbegriff des Anspruchs 8, die insbesondere für einen Ansaugtrakt einer Brennkraftmaschine bestimmt sind.

Das Dokument Wo9600646A1 offenbart einen Luftschlauch gemäß dem Oberbegriff des Anspruchs 1. Bei Ansaugluftrohren oder -schläuchen sowie Ladeluftrohren oder -schläuchen, die durch Blasformen hergestellt werden und ein Rohr- oder Schlauchende zum Aufstecken auf einen Rohrstutzen eines Luftfilters, Ladeluftkühlers oder dergleichen aufweisen, wird das Rohr- oder Schlauchende häufig mittels einer Schelle auf dem Rohrstutzen gesichert. Um die Schelle an der richtigen Stelle auf dem Rohr- oder Schlauchende zu positionieren, kann das Rohr- oder Schlauchende an seinem äußeren Umfang mit einem Schellensitz versehen sein, der eine axiale Verschiebung der Schelle entlang des Rohr- oder Schlauchendes bei und nach dem Festziehen der Schelle verhindert. Dort, wo ein solcher Schellensitz am äußeren Umfang des Rohr- oder Schlauchendes vorgesehen ist, ist nicht selten radial einwärts vom Schellensitz am inneren Umfang des Rohr- oder Schlauchendes ein überstehender Ringwulst angeformt. Dieser Ringwulst dient dazu beim Festziehen der Schelle die Flächenpressung zwischen dem Rohr- oder Schlauchende und dem Rohrstutzen radial einwärts von der Schelle lokal zu erhöhen, um auf diese Weise für eine bessere Dichtwirkung zu sorgen. Der Ringwulst erstreckt sich gewöhnlich entlang von einer Mittelebene der Schelle oder des Schellensitzes und ist um einiges schmaler als die Schelle bzw. der Schellensitz, da sich nur auf diese Weise eine lokale Erhöhung der Flächenpressung erzielen lässt. Der Innendurchmesser des Ringwulstes entspricht zumeist dem Außendurchmesser des äußeren Umfangs des Rohrstutzens, so dass der Ringwulst beim Aufstecken des Rohr- oder Schlauchendes auf den Rohrstutzen am äußeren Umfang entlang gleitet.

Allerdings sind auch viele Rohrstutzen am äußeren Umfang mit mindestens einem überstehenden Ringwulst versehen, um den Halt eines auf den Rohrstutzen aufgesteckten Schlauchs aus einem flexiblen oder nachgiebigen Material durch eine lokale Aufweitung der Umfangswand des Schlauches radial auswärts vom Ringwulst zu verbessern und ggf. durch die Aufweitung der Umfangswand eine axiale Bewegung einer zur Sicherung des Schlauchendes hinter der Aufweitung angebrachten Schelle zu verhindern. Ein solcher Ringwulst kann um mehrere Millimeter über den äußeren Umfang des Rohrstutzens überstehen. Um die Montage eines Rohr- oder Schlauchendes auf einem Rohrstutzen zu erleichtern, ist manchmal auch am freien Ende des Rohrstutzens ein solcher Ringwulst vorgesehen, der in eine Querschnittserweiterung des Rohr- oder Schlauchendes einrastet oder einschnappt, sobald das Rohr- oder Schlauchende weit genug auf den Rohrstutzen aufgesteckt worden ist.

Der Ringwulst kann insbesondere dann zu Problemen führen, wenn ein Rohr- oder Schlauchende eines durch Blasformen hergestellten Ansaug- oder Ladeluftrohrs bzw. Ansaug- oder Ladeluftschlauchs der zuvor beschriebenen Art auf den Rohrstutzen aufgesteckt werden soll. Da sich ein solches Rohr- oder Schlauchende anders als ein Rohr- oder Schlauchende aus einem Elastomermaterial wegen der geringen Elastizität des Kunststoffmaterials nicht aufweiten lässt, kann der nach innen über den inneren Umfang des Rohr- oder Schlauchendes überstehende Ringwulst gar nicht oder nur unter erheblichem Kraftaufwand mit dem Risiko eines Aufreißens des Rohr- oder Schlauchendes über den nach außen überstehenden Ringwulst auf dem Rohrstutzen hinweg bewegt werden. Eine Ursache dieser Probleme liegt darin, dass sowohl der Ringwulst am inneren Umfang des Rohr- oder Schlauchendes als auch der Ringwulst am äußeren Umfang des Rohrstutzens entlang von einer senkrecht zur Längsmittelachse des Rohr- oder Schlauchendes bzw. des Rohrstutzens ausgerichteten Ebene verlaufen, so dass sie beim Aufstecken des Rohr- oder Schlauchendes auf den Rohrstutzen entlang ihrer gesamten Umfanglänge gleichzeitig gegeneinander stoßen.

In einem solchen Fall muss daher zur Problemlösung zumeist entweder der Rohrstutzen oder das Rohr- oder Schlauchende geändert oder ein Zwischenstück aus einem Elastomermaterial zwischen das Rohr- oder Schlauchende und den Rohrstutzen eingesetzt werden. Beide Problemlösungen sind aufwändig und teuer, wobei sich zudem die zuerst genannte Lösung nur schwer umsetzen lässt, wenn das Bauteil mit dem Rohrstutzen bzw. das Ansaug- oder Ladeluftrohr oder der Ansaug- oder Ladeluftschlauch noch bei einer Reihe von anderen Brennkraftmaschinen desselben Konzerns in anderen Einbausituationen Verwendung finden.

Ausgehend hiervon liegt der Erfindung die Aufgabe zugrunde, einen Rohr- oder Schlauchanschluss der eingangs genannten Art, ein Luftrohr oder einen Luftschlauch der eingangs genannten Art sowie ein Bauteil der eingangs genannten Art dahingehend zu verbessern, dass sich das Rohr- oder Schlauchende leichter auf den Rohrstutzen aufstecken lässt.

Diese Aufgabe wird im Hinblick auf den Rohr- oder Schlauchanschluss erfindungsgemäß dadurch gelöst, dass einer von dem ersten und dem zweiten umlaufenden Ringwulst entlang von einer zu einer Längsmittelachse des Rohrstutzens und/oder des Rohr- oder Schlauchendes senkrechten Ebene verläuft, während der andere von dem ersten und dem zweiten umlaufenden Ringwulst eine zur Längsmittelachse des Rohrstutzens und/oder des Rohr- oder Schlauchendes senkrechte Ebene, vorzugsweise die Mittelebene der Schelle oder eines Schellensitzes, an mindestens zwei Stellen kreuzt und jeweils teilweise beiderseits dieser Ebene verläuft. Dadurch treten die beiden Ringwülste nicht entlang ihrer gesamten Länge gleichzeitig in Kontakt, wenn das Rohr- oder Schlauchende auf den Rohrstutzen aufgesteckt wird. Stattdessen bewegen sich die beiden Ringwülste nach und nach übereinander hinweg. Dabei liegen sie zu jedem Zeitpunkt nur an wenigen Berührungspunkten gegeneinander an, während zwischen den Berührungspunkten ein schmaler Spalt zwischen dem Ringwulst am inneren Umfang des Rohr- oder Schlauchendes und dem gegenüberliegenden äußeren Umfang des Rohrstutzens bzw. zwischen dem Ringwulst am äußeren Umfang des Rohrstutzens und dem gegenüberliegenden inneren Umfang des Rohr- oder Schlauchendes vorhanden ist. Infolge dieses Spaltes können sich der Rohrstutzen und/oder das Rohr- oder Schlauchende zwischen den Berührungspunkten etwas verformen, wodurch die beiden Ringwülste an den Berührungspunkten leichter übereinander hinweg gleiten.

Die Verformung des Rohrstutzens und/oder des Rohr- oder Schlauchendes ist dabei umso stärker, je kleiner ihre Wandstärke und je größer ihr Durchmesser ist. Da durch Blasformen hergestellte Ansaugluftrohre oder -schläuche bzw. Ladeluftrohre oder - schläuche eine im Vergleich zum Durchmesser relativ kleine Wandstärke besitzen, reicht die Verformung des Rohr- oder Schlauchendes in der Regel aus, um den ersten umlaufenden Ringwulst beim Aufstecken des Rohr- oder Schlauchendes auf den Rohrstutzen über den zweiten umlaufenden Ringwulst hinweg zu bewegen.

Unter einem umlaufenden Ringwulst wird im Rahmen der vorliegenden Patentanmeldung ein endloser Wulst verstanden, der sich ohne Unterbrechung ringförmig um den gesamten Umfang des Rohr- oder Schlauchendes bzw. des Rohrstutzens herum erstreckt.

Eine bevorzugte Ausgestaltung der Erfindung sieht vor, dass der nach außen über den äußeren Umfang des Rohrstutzens überstehende zweite umlaufende Ringwulst entlang von einer zur Längsmittelachse des Rohrstutzens senkrechten Ebene verläuft, während der nach innen über den inneren Umfang des Rohr- oder Schlauchendes überstehende erste umlaufende Ringwulst eine zur Längsmittelachse des Rohr- oder Schlauchendes senkrechte Ebene, vorzugsweise die Mittelebene der Schelle oder eines Schellensitzes, an mindestens zwei Stellen kreuzt. Wenn der Rohrstutzen bei verschiedenen Anwendungen einerseits zum Aufstecken von blasgeformten Rohren oder Schläuchen und andererseits zum Aufstecken von elastisch verformbaren Schläuchen eingesetzt wird, hat dies den Vorteil, dass im letzteren Fall der Halt eines auf den Rohrstutzen aufgesteckten elastisch verformbaren Schlauchendes durch einen zur Längsmittelachse des Rohrstutzens senkrechten Verlauf des Ringwulstes verbessert werden kann.

Grundsätzlich kann jedoch dasselbe Ergebnis erreicht werden, wenn der nach innen über den inneren Umfang des Rohr- oder Schlauchendes überstehende erste umlaufende Ringwulst entlang von einer zur Längsmittelachse des Rohr- oder Schlauchendes senkrechten Ebene verläuft, vorzugsweise entlang der Mittelebene der Schelle oder eines Schellensitzes, während der nach außen über den äußeren Umfang des Rohrstutzens überstehende zweite umlaufende Ringwulst eine zur Längsmittelachse des Rohrstutzens senkrechte Ebene an mindestens zwei Stellen kreuzt.

Gemäß einer ersten bevorzugten Erfindungsalternative erstreckt sich der erste umlaufende Ringwulst entlang von einer zur Längsmittelachse des Rohr- oder Schlauchendes geneigten Ebene, wobei er vorzugsweise die zur Längsmittelachse des Rohr- oder Schlauchendes senkrechte Mittelebene der Schelle oder des Schellensitzes an zwei Stellen kreuzt und sich jeweils zur Hälfte beiderseits dieser Mittelebene erstreckt. Wenn das Rohr- oder Schlauchende auf den Rohrstutzen aufgesteckt wird, tritt bei dieser Alternative der erste umlaufende Ringwulst zuerst nur an einem einzigen Berührungspunkt mit dem nach außen überstehenden Ringwulst des Rohrstutzens in Kontakt, wodurch eine Vergrößerung des Innenradius an diesem Berührungspunkt durch eine Verformung des Rohr- oder Schlauchendes erleichtert wird. Sobald sich die beiden Ringwulste an diesem Berührungspunkt übereinander bewegt haben, stehen sie während der weiteren Relativbewegung des Rohr- oder Schlauchendes und des Rohrstutzens an zwei Berührungspunkten im Kontakt, die sich in entgegengesetzten Richtungen um den Umfang des Rohr- oder Schlauchendes bzw. des Rohrstutzens herum bewegen und sich dabei zuerst voneinander entfernen und dann wieder aneinander annähern.

Eine zweite mögliche Erfindungsalternative sieht hingegen vor, dass der erste umlaufende Ringwulst einen wellenförmigen Verlauf besitzt, wobei er in Umfangsrichtung des Rohr- oder Schlauchendes vorteilhaft zwei Wellenberge und zwei Wellentäler aufweist, so dass er beim Aufstecken des Rohr- oder Schlauchendes auf den Rohrstutzen an zwei Berührungspunkten gleichzeitig mit dem zweiten umlaufenden Ringwulst in Kontakt tritt. Während sich die beiden umlaufenden Ringwülste übereinander hinweg bewegen, stehen sie in diesem Fall an vier Berührungspunkten im Kontakt miteinander, wodurch zwischen den benachbarten Berührungspunkten ebenfalls noch genug Platz für eine ausreichende Verformung des Rohr- oder Schlauchendes bleibt. Vorteilhaft steht der Ringwulst nach beiden Seiten gleich weit über die zur Längsmittelachse des Rohr- oder Schlauchendes senkrechte Mittelebene des Schellensitzes oder der Schelle über, so dass der nach dem Festziehen der Schelle von der Schelle ausgeübte Druck entlang der gesamten Länge des ersten umlaufenden Ringwulstes gleichmäßig über das Rohr- oder Schlauchende in den Rohrstutzen eingeleitet wird.

Zweckmäßig ist das Rohr- oder Schlauchende Teil eines durch Blasformen aus Kunststoff hergestellten Ansaug- oder Ladeluftrohrs oder -schlauchs für einen Ansaugtrakt einer Brennkraftmaschine, wobei der umlaufende erste Ringwulst ein beim Blasformen einstückig am inneren Umfang des Rohr- oder Schlauchendes angeformter Ringwulst ist. Bei dem Rohrstutzen kann es sich um einen durch Spritzgießen aus Kunststoff oder durch Gießen und/oder spanabhebende Bearbeitung aus Metall geformten Rohrstutzen handeln, der zum Beispiel über ein aus Kunststoff bestehendes Filtergehäuse eines Luftfilters bzw. ein aus Metall bestehendes Gehäuse eines Ladeluftkühlers übersteht.

Bei dem erfindungsgemäßen Luftrohr oder Luftschlauch mit einem Rohr- oder Schlauchende zum Aufstecken auf einen Rohrstutzen, der einen Schellensitz für eine zur Befestigung des Rohr- oder Schlauchendes auf dem Rohrstutzen dienende Schelle sowie einen radial einwärts vom Schellensitz nach innen überstehenden umlaufenden Ringwulst aufweist, dessen Breite geringer als die Breite des Schellensitzes ist, und der einstückig an einen inneren Umfang des Rohr- oder Schlauchendes angeformt ist, wird die Aufgabe dadurch gelöst, dass der Ringwulst eine zur Längsmittelachse des Rohr- oder Schlauchendes senkrechte Ebene an mindestens zwei Stellen kreuzt. Wie zuvor beschrieben, erstreckt sich der Ringwulst zweckmäßig entweder entlang von einer zur Längsmittelachse des Rohr- oder Schlauchendes geneigten Ebene oder weist einen wellenförmigen Verlauf auf.

Um das Aufstecken des Rohr- oder Schlauchendes auf den Rohrstutzen zu erleichtern, weist das Rohr- oder Schlauchende zweckmäßig in Aufsteckrichtung vor dem Schellensitz ein sich konisch erweiterndes freies Ende auf, das auf dem Fachgebiet auch als Auftulpung bekannt ist.

In Aufsteckrichtung hinter dem Schellensitz ist das Rohr- oder Schlauchende zweckmäßig mit einer Querschnittsverengung versehen, wo das Rohr- oder Schlauchende vorteilhaft denselben Innendurchmesser wie der Rohrstutzen aufweist, um den Strömungswiderstand im Inneren des Rohr- oder Schlauchanschlusses möglichst niedrig zu halten. Die Querschnittsverengung ist bevorzugt so angeordnet, dass sie sich unmittelbar hinter dem freien Ende des Rohrstutzens befindet, nachdem dieser in das Rohr- oder Schlauchende eingeführt und die Schelle auf dem Schellensitz befestigt worden ist.

Wenn der über den äußeren Umfang des Rohrstutzens überstehende zweite Ringwulst am freien Ende des Rohrstutzens angeordnet ist, weist das Rohr- oder Schlauchende hinter dem Schellensitz und vor der Querschnittsverengung zweckmäßig noch eine Querschnittserweiterung auf, in die der zweite Ringwulst nach dem Passieren des ersten Ringwulstes einrasten kann.

Im Folgenden wird die Erfindung anhand von zwei in der Zeichnung dargestellten Ausführungsformen näher erläutert.
Fig. 1 zeigt eine Längsschnittansicht eines Rohrstutzens und eines Rohr- oder Schlauchendes eines Ansaug- oder Ladeluftschlauchs vor dem Aufstecken auf den Rohrstutzen;
die Figuren 2 und 3 zeigen Ansichten entsprechend Fig. 1, jedoch im verschiedenen Stadien während des Aufsteckens des Rohr- oder Schlauchendes auf den Rohrstutzen;
Fig. 4 zeigt eine Ansicht entsprechend den Figuren 1 bis 3, jedoch nach dem Aufstecken des Rohr- oder Schlauchendes auf den Rohrstutzen;
Fig. 5 zeigt eine Längsschnittansicht eines etwas modifizierten Rohr- oder Schlauchendes eines Ansaug- oder Ladeluftschlauchs.

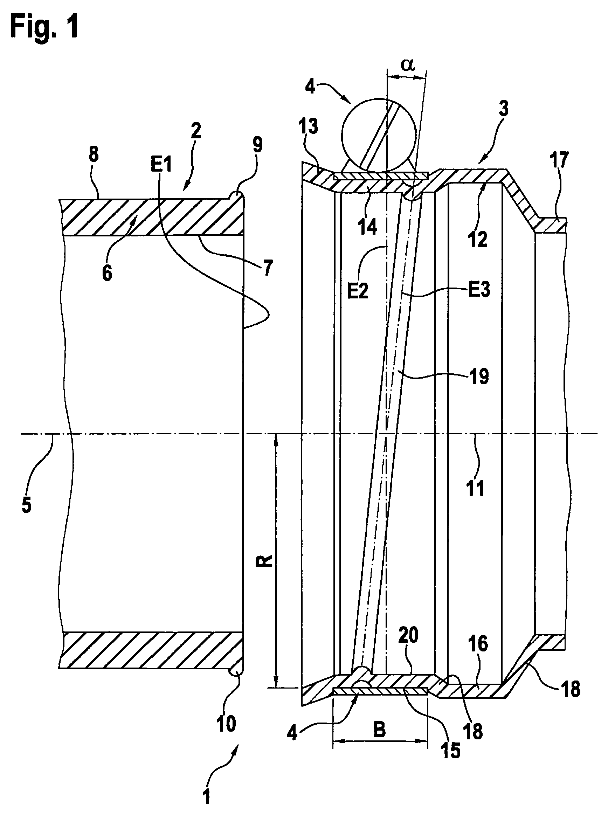

Der in der Zeichnung dargestellte Rohr- oder Schlauchanschluss 1 eines Luftansaugtraktes eines Kraftfahrzeugs umfasst einen Rohrstutzen 2, der zum Beispiel über ein Filtergehäuse eines Luftfilters (nicht dargestellt) übersteht und bei der Herstellung des Filtergehäuses aus Kunststoff einstückig am Filtergehäuse angeformt worden ist. Der Rohr- oder Schlauchanschluss 1 umfasst weiter ein erweitertes Rohr- oder Schlauchende 3 eines durch Blasformen aus Kunststoff hergestellten Ansaugluftrohrs oder Ansaugluftschlauchs (nicht dargestellt), das außen auf den Rohrstutzen 2 aufgesteckt und mittels einer Rohr- oder Schlauchschelle 4 auf dem Rohrstutzen 2 befestigt wird, wie in den Figuren 1 bis 4 dargestellt. Bei der Rohr- oder Schlauchschelle 4 handelt es sich um eine beliebige zu diesem Zweck geeignete Schelle, die daher hier nicht näher beschrieben werden soll.

Wie am besten in Fig. 1 sichtbar ist, weist der Rohrstutzen 2 eine Längsmittelachse 5 und eine zur Längsmittelachse 5 koaxiale Umfangswand 6 auf, die von einer inneren zylindrischen Umfangsfläche 7 und einer äußeren zylindrischen Umfangsfläche 8 begrenzt wird. Am freien Ende des Rohrstutzens 2 ist ein Ringwulst 9 angeformt, der sich entlang einer mit der Stirnfläche des Rohrstutzens 2 fluchtenden, zur Längsmittelachse 5 senkrechten Ebene E1 ohne Unterbrechung um den gesamten Umfang des Rohrstutzens 2 herum erstreckt, wobei er nach außen über die äußere Umfangsfläche 8 übersteht und in axialer Richtung zur äußeren Umfangsfläche 8 hin hinterschnitten ist. Der Ringwulst 9 weist eine konvex gerundete äußere Umfangsfläche 10 auf.

Wie ebenfalls am besten in Fig. 1 sichtbar ist, weist das Rohr- oder Schlauchende 3 eine Längsmittelachse 11 auf, die nach dem Aufstecken auf den Rohrstutzen 2 mit dessen Längsmittelachse 5 fluchtet. Das Rohr- oder Schlauchende 3 weist eine zu seiner Längsmittelachse 11 koaxiale Umfangswand 12 auf, die entlang der gesamten Länge und des gesamten Umfangs des Rohr- oder Schlauchendes 3 im Wesentlichen dieselbe Wandstärke besitzt, wobei diese Wandstärke kleiner als die Wandstärke der Umfangswand 6 des Rohrstutzens 2 ist. Um eine in Fig. 1 dem Rohrstutzen 2 zugewandte Öffnung des Rohr- oder Schlauchendes 3 herum weist die Umfangswand 12 des Rohr- oder Schlauchendes 3 eine zum Rohrstutzen 2 hin divergierende konische Erweiterung 13 oder Auftulpung auf, die das Aufstecken des Rohr- oder Schlauchendes 3 auf den Rohrstutzen 2 erleichtert. Hinter der Erweiterung 13 oder Auftulpung weist das Rohr- oder Schlauchende 3 einen allgemein zylindrischen Umfangswandabschnitt 14 auf, dessen äußere Umfangsfläche einen Sitz 15 für die Rohr- oder Schlauchschelle 4 bildet. Die äußere Umfangsfläche bzw. der Schellensitz 15 weist eine Breite B auf, die der Breite der Rohr- oder Schlauchschelle 4 entspricht. An seinem vorderen Ende grenzt der Umfangswandabschnitt 14 an die Erweiterung 13 oder Auftulpung an, wo die Umfangswand 12 ebenso wie entlang einer an das hintere Ende des Umfangswandabschnitts 14 angrenzenden konischen Ringschulter 18 des Rohr- oder Schlauchendes 3 radial nach außen über den Schellensitz 15 übersteht, so dass die Rohr- oder Schlauchschelle 4 während und nach dem Festziehen auf dem Schellensitz 15 festgehalten wird und nicht axial verrutschen kann.

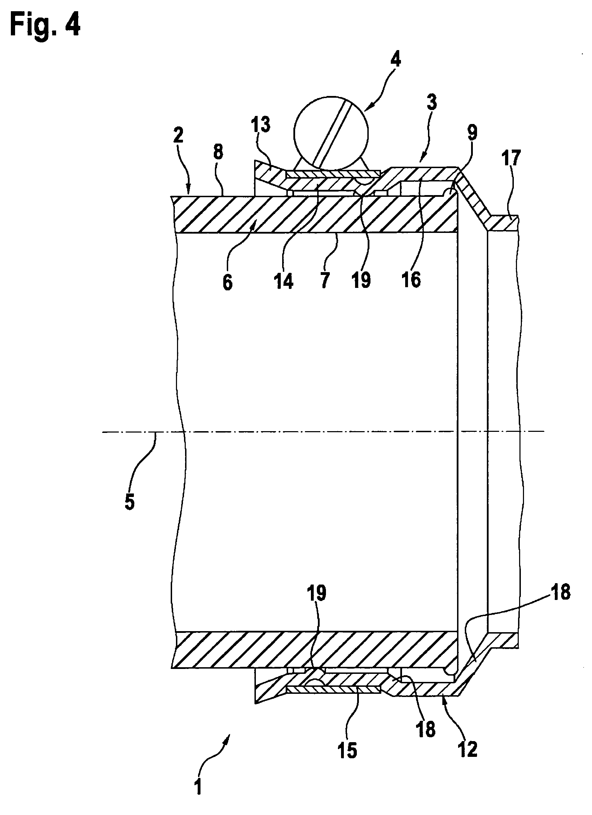

Hinter der Ringschulter 18 weist das Rohr- oder Schlauchende 3 zuerst eine Querschnittserweiterung 16 und dann eine Querschnittsverengung 17 auf, die durch eine weitere konische Ringschulter 18 von der Querschnittserweiterung 16 getrennt ist. An der weiteren Ringschulter 18 verengt sich das erweiterte Rohr- oder Schlauchende 3 bis auf einen Querschnitt verengt, dessen Innendurchmesser dem Innendurchmesser des Rohrstutzens 2 entspricht, um den Strömungswiderstand des Rohr- oder Schlauchanschlusses 1 zu minimieren. Die Querschnittserweiterung 16 dient zur Aufnahme des Ringwulstes 9 am freien Ende des Rohrstutzens 2, wie in Fig. 4 dargestellt, der nach dem Passieren des Umfangswandabschnitts 14 in die Querschnittserweiterung 16 einrastet.

Im Bereich des Schellensitzes 15 ist ein Ringwulst 19 in den Umfangswandabschnitt 14 eingeformt, der nach innen über eine zylindrische innere Umfangsfläche 20 des Umfangswandabschnitts 14 übersteht und sich ohne Unterbrechung ringförmig um den gesamten Umfang des Rohr- oder Schlauchendes 3 herum erstreckt. Die Breite des Ringwulstes 19 beträgt etwa ein Viertel der Breite des Schellensitzes 15. Nach dem Festziehen der Rohr- oder Schlauchschelle 4 wird der Ringwulst 19 hinter dem Ringwulst 9 des Rohrstutzens 2 gegen dessen zylindrische äußere Umfangsfläche 8 angepresst, wobei infolge der geringeren Breite des Ringwulstes 19 im Vergleich zur Breite des Schellensitzes 15 die Flächenpressung verstärkt und damit die Abdichtung verbessert werden kann.

Der Innendurchmesser des Ringwulstes 19 entspricht etwa dem Außendurchmesser der zylindrischen äußeren Umfangsfläche 8 des Rohrstutzens 2, so dass er unmittelbar nach dem Aufstecken des Rohr- oder Schlauchendes 3 auf den Rohrstutzen 2 an dieser Umfangsfläche 8 entlang gleitet. Dies bedeutet jedoch, dass er zuvor gegen den Ringwulst 9 am freien Ende des Rohrstutzens 2 anstößt, da der Ringwulst 9 nach außen über die Umfangsfläche 8 übersteht.

Während sich in einem solchen Fall ein Rohr- oder Schlauchende eines aus einem Elastomermaterial bestehenden Ansaugluftrohrs oder Ansaugluftschlauchs elastisch aufweiten lässt, um es über den Ringwulst 9 hinweg zu bewegen, ist dies bei dem Rohr- oder Schlauchende 3 des durch Blasformen aus Kunststoff hergestellten Ansaugluftrohrs oder Ansaugluftschlauchs nicht möglich, da sich das Rohr- oder Schlauchende 3 aufgrund seiner relativ geringen Wandstärke zwar etwas verformen aber nur mit erheblichem Kraftaufwand bzw. nicht aufweiten lässt.

Um es trotzdem zu ermöglichen, den einen Ringwulst 19 an der Innenseite des Rohr- oder Schlauchendes 3 über den anderen Ringwulst 9 an der Außenseite des Rohrstutzens 2 hinweg zu bewegen, verläuft bei dem in den Figuren 1 bis 4 dargestellten Rohr- oder Schlauchende 3 der zuerst genannte Ringwulst 19 anders als bei bekannten Rohr- oder Schlauchenden 3 nicht entlang einer zur Längsmittelachse 11 des Rohr- oder Schlauchendes 3 senkrechten Mittelebene E2 des Schellensitzes 15, sondern entlang einer Ebene E3, die in Bezug zu der Ebene E2 unter einem Winkel α geneigt ist. Der Neigungswinkel α zwischen den beiden Ebenen E2 und E3 beträgt bei dem in den Figuren 1 bis 4 dargestellten Rohr- oder Schlauchende etwa 10 Grad. Der Neigungswinkel α wird durch den Radius R und die Breite B des Schellensitzes 15 bestimmt, wobei vorteilhaft tan α = B/2R bzw. wegen der Breite des Ringwulstes 19 tan α ein wenig kleiner als B/2R ist. Vorteilhaft erstreckt sich der Ringwulst 19 in Umfangsrichtung des Umfangswandabschnitts 14 über dessen gesamte Breite bzw. über die gesamte Breite B des Schellensitzes 15, wobei er sich in Fig. 1 an der Oberseite des Rohr- oder Schlauchendes 3 bis zum hinteren Ende des Umfangswandabschnitts 14 und an der diametral gegenüberliegenden Unterseite des Rohr- oder Schlauchendes 3 bis zum vorderen Ende des Umfangswandabschnitts 14 erstreckt.

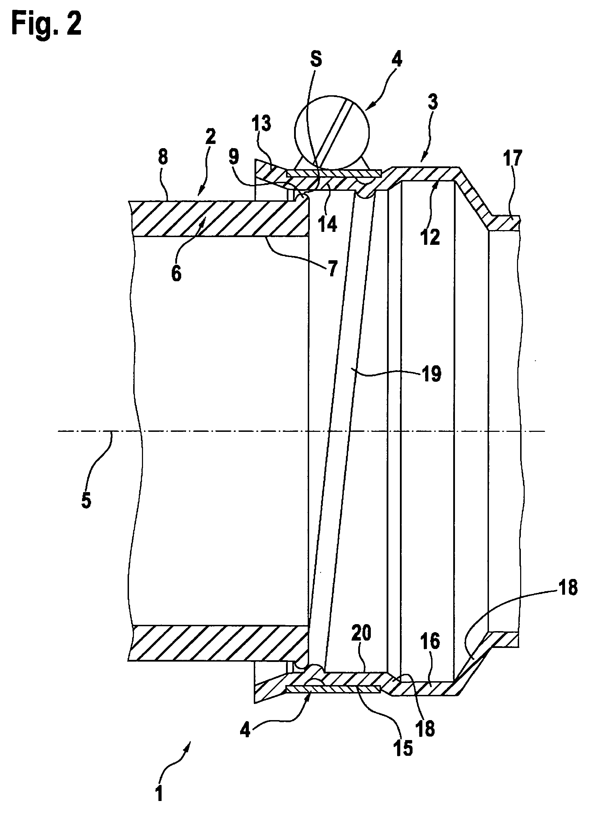

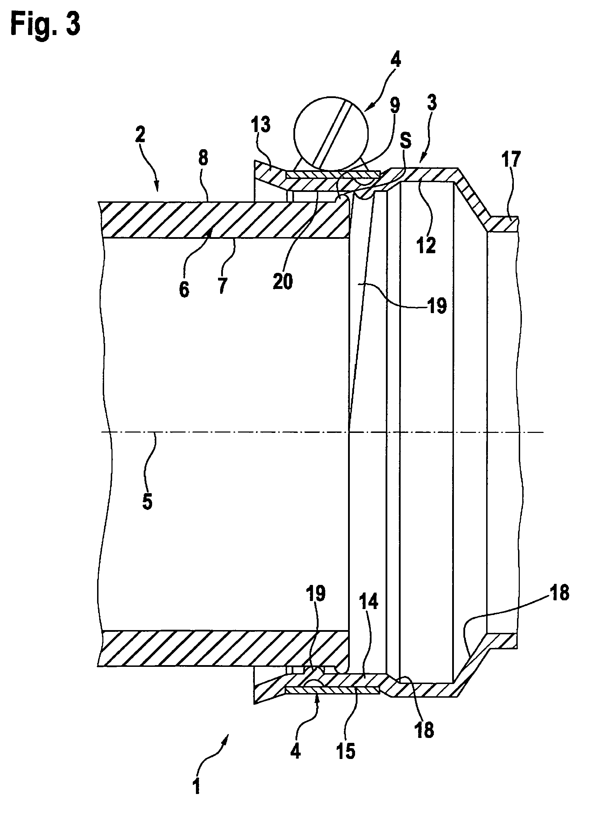

Die Neigung des Ringwulstes 19 führt dazu, dass die beiden Ringwülste 9, 19 nicht entlang ihrer gesamten Länge gleichzeitig aufeinander stoßen, wenn das Rohr- oder Schlauchende 3 auf den Rohrstutzen 2 aufgesteckt wird, sondern dass der Ringwulst 19 nur an einer einzigen Stelle auf den Ringwulst 9 trifft, wie in Fig. 2 an der Unterseite des Rohr- oder Schlauchendes 3 und des Rohrstutzens 2 dargestellt, während über den restlichen Umfang des Rohr- oder Schlauchendes 3 noch ein kleiner Spalt S zwischen der zylindrischen inneren Umfangsfläche 20 des Umfangswandabschnitts 14 und dem Ringwulst 9 des Rohrstutzens 2 vorhanden ist, wie in Fig. 2 an der Oberseite des Rohr- oder Schlauchendes 3 und des Rohrstutzens 2 dargestellt. Dieser Spalt S ermöglicht es, dass sich das Rohr- oder Schlauchende 3 etwas verformt und unrund wird, wenn es in Aufsteckrichtung gegen den Rohrstutzen 2 gedrückt wird. Durch die Verformung bzw. Unrundheit wird der Radius R des Umfangswandabschnitts 14 im Bereich des Berührungspunktes der beiden Ringwülste 9, 19 etwas größer, so dass der eine Ringwulst 19 auf den anderen Ringwulst 9 gleiten kann. Nach dem Überwinden dieser Schwelle gleiten die beiden Ringwülste 19, 9 aneinander vorbei, wobei sie sich stets nur an zwei Berührungspunkten im Kontakt miteinander befinden, wie in Fig. 3 dargestellt. Dadurch kann die Gleitreibung verhältnismäßig gering gehalten und ein übermäßiger Bewegungswiderstand beim Aufstecken des Rohr- oder Schlauchendes 3 auf den Rohrstutzen 2 vermieden werden. Nach dem Passieren des Ringwulstes 19 bzw. des Umfangswandabschnitts 14 rastet der Ringwulst 9 des Rohrstutzens 2 in der Querschnittserweiterung 16 des Rohr- oder Schlauchendes 3 ein, wie in Fig. 4 dargestellt.

Die Rohr- oder Schlauchschelle 4 kann dann festgezogen werden, um das Rohr- oder Schlauchende 3 auf dem Rohrstutzen 2 zu sichern, wobei der Ringwulst 19 mit hoher Flächenpressung gegen die zylindrische äußere Umfangsfläche 8 des Rohrstutzens 2 angepresst wird.

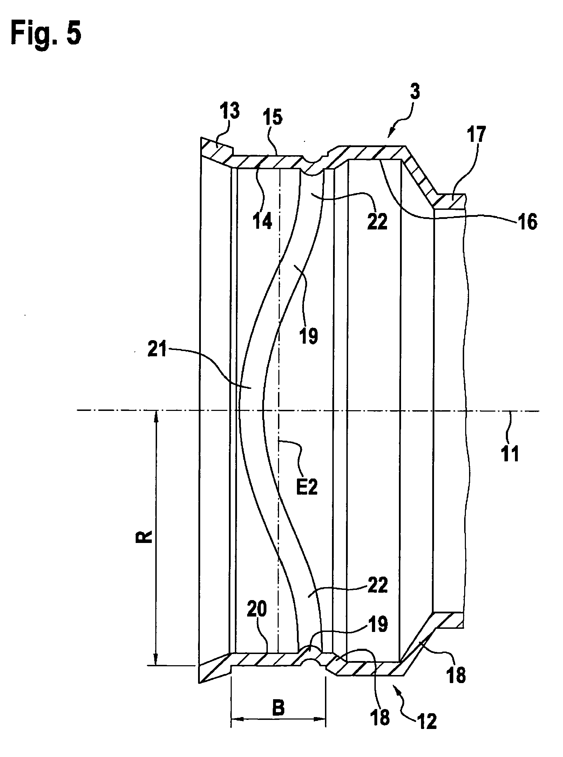

Im Unterschied zu dem Rohr- oder Schlauchende in den Figuren 1 bis 4 besitzt der umlaufende Ringwulst 19 bei dem in Fig. 5 dargestellten Rohr- oder Schlauchende 3 in Umfangsrichtung des Rohr- oder Schlauchendes 3 einen sinuswellenförmigen Verlauf mit zwei in Richtung des Rohrstutzens 2 weisenden Wellenbergen 21 (nur einer sichtbar) und zwei zwischen den Wellenbergen 21 angeordneten Wellentälern 22, so dass der Ringwulst 19 die Mittelebene E2 des Schellensitzes 15 an vier Stellen kreuzt. Die Scheitel der Wellenberge 21 und die Scheitel der Wellentäler sind in axialer Richtung jeweils in enger Nachbarschaft von den beiden axial entgegengesetzten Begrenzungsrändern des Schellensitzes 15 angeordnet und liegen jeweils auf einer zur Längsmittelachse 11 des Rohr- oder Schlauchendes 3 senkrechten Ebene, so dass die dem Rohrstutzen 2 zugewandten Scheitel der beiden Wellenberge 21, die sich in Bezug zur Längsmittelachse 11 diametral gegenüberliegen, beim Aufstecken des Rohr- oder Schlauchendes 3 auf den Rohrstutzen 2 gleichzeitig mit dessen Ringwulst 9 in Kontakt treten. Nachdem sich die beiden Ringwulste 9, 19 übereinander geschoben haben und sich aneinander vorbei bewegen, liegen sie jeweils an vier Berührungspunkten gegeneinander an.

### BEZUGSZEICHENLISTE

- 1: Rohr- oder Schlauchanschluss
- 2: Rohrstutzen
- 3: Rohr- oder Schlauchende
- 4: Rohr- oder Schlauchschelle
- 5: Längsmittelachse Rohrstutzen
- 6: Umfangswand Rohrstutzen
- 7: innere Umfangsfläche
- 8: äußere Umfangsfläche
- 9: Ringwulst
- 10: Begrenzungsfläche
- 11: Längsmittelachse Rohr- oder Schlauchende
- 12: Umfangwand Rohr- oder Schlauchende
- 13: konische Erweiterung
- 14: zylindrischer Umfangswandabschnitt
- 15: Schellensitz
- 16: Querschnittserweiterung
- 17: Querschnittsverengung
- 18: Ringschulter
- 19: Ringwulst
- 20: innere Umfangsfläche
- 21: Wellenberg
- 22: Wellental
- E1: Ebene Ringwulst 9
- E2: Mittelebene Schelle bzw. Schellensitz
- E3: Ebene Ringwulst 19
- α: Neigungswinkel

## Patentansprüche

1. Luftrohr oder Luftschlauch, insbesondere für einen Ansaugtrakt einer Brennkraftmaschine, mit einem Rohr- oder Schlauchende (3) zum Aufstecken auf einen Rohrstutzen (2) und mit einem Schellensitz (15) für eine zur Befestigung des Rohr- oder Schlauchendes (3) auf dem Rohrstutzen (2) dienende Schelle (4), wobei das Rohr- oder Schlauchende (3) radial einwärts vom Schellensitz (15) einen nach innen überstehenden umlaufenden Ringwulst (19) aufweist, dessen Breite geringer als die Breite des Schellensitzes (15) ist und der einstückig an einen inneren Umfang des Rohr- oder Schlauchendes (3) angeformt ist, **dadurch gekennzeichnet, dass** der Ringwulst (19) eine zur Längsmittelachse (11) des Rohr- oder Schlauchendes (3) senkrechte Längsmittelebene (E2) des Schellensitzes (15) an mindestens zwei Stellen kreuzt.

2. Luftrohr oder Luftschlauch nach Anspruch 1, **dadurch gekennzeichnet, dass** das Rohr- oder Schlauchende (3) vor dem Schellensitz (15) eine zu seinem freien Ende hin divergierende Querschnittserweiterung (13) aufweist.

3. Luftrohr oder Luftschlauch nach einem der vorhergehenden Ansprüche, **dadurch gekennzeichnet, dass** das Rohr- oder Schlauchende (3) hinter dem Schellensitz (15) eine Querschnittsverengung (17) aufweist.

4. Luftrohr oder Luftschlauch nach einem der vorhergehenden Ansprüche, **dadurch gekennzeichnet, dass** das Rohr- oder Schlauchende (3) hinter dem Schellensitz (15) eine Querschnittserweiterung (16) aufweist.

5. Luftrohr oder Luftschlauch nach einem der vorhergehenden Ansprüche, **dadurch gekennzeichnet, dass** die Querschnittsverengung (17) hinter der Querschnittserweiterung (16) angeordnet ist.

6. Luftrohr oder Luftschlauch nach einem der vorhergehenden Ansprüche, **dadurch gekennzeichnet, dass** es durch Blasformen aus Kunststoff hergestellt ist und eine allgemein konstante Wandstärke aufweist.

7. Luftrohr oder Luftschlauch nach einem der vorhergehenden Ansprüche, **dadurch gekennzeichnet, dass** Rohr- oder Schlauchende (3) beiderseits des Schellensitzes (15) einen erweiterten Querschnitt besitzt.

8. Bauteil mit einem Rohrstutzen (2) zum Aufstecken eines Rohr- oder Schlauchendes (3) eines Luftrohrs oder Luftschlauchs, insbesondere für einen Ansaugtrakt einer Brennkraftmaschine, wobei der Rohrstutzen (2) mindestens einen nach außen überstehenden umlaufenden Ringwulst aufweist, der an einem freien Ende des Rohrstutzens (2) einstückig angeformt ist, **dadurch gekennzeichnet, dass** der Ringwulst eine zur Längsmittelachse (5) des Rohrstutzens (2) senkrechte Längsmittelebene (E2) an mindestens zwei Stellen kreuzt.

9. Rohr- oder Schlauchanschluss (1), mit einem Rohrstutzen (2), einem außen auf den Rohrstutzen (2) aufgesteckten Rohr- oder Schlauchende (3) und einer das Rohr- oder Schlauchende (3) auf dem Rohrstutzen (2) haltenden Schelle (4), wobei das Rohr- oder Schlauchende (3) radial einwärts von der Schelle (4) einen nach innen überstehenden umlaufenden ersten Ringwulst (19) aufweist, dessen Breite kleiner als die Breite der Schelle (4) ist und der einstückig an einem inneren Umfang des Rohr- oder Schlauchendes (3) angeformt ist, und wobei der Rohrstutzen (2) mindestens einen nach außen überstehenden umlaufenden zweiten Ringwulst (9) aufweist, über den sich der erste Ringwulst (19) beim Aufstecken des Rohr- oder Schlauchendes (3) auf den Rohrstutzen (2) hinweg bewegt und der an einem freien Ende des Rohrstutzens (2) einstückig angeformt ist, **dadurch gekennzeichnet, dass** einer von dem ersten und dem zweiten umlaufenden Ringwulst (9, 19) entlang von einer zu einer Längsmittelachse (5, 11) des Rohrstutzens (2) und/oder des Rohr- oder Schlauchendes (3) senkrechten Ebene (E1) verläuft, und dass der andere von dem ersten und dem zweiten umlaufenden Ringwulst (9,19) eine zur Längsmittelachse (5, 11) des Rohrstutzens (2) und/oder des Rohr- oder Schlauchendes (3) senkrechte Ebene (E2) an mindestens zwei Stellen kreuzt, so dass die beiden Wülste (9, 19) nicht entlang ihrer gesamten Länge gleichzeitig in Kontakt treten, wenn sich der erste Ringwulst (19) beim Aufstecken des Rohr- oder Schlauchendes (3) auf den Rohrstutzen (29 über den zweiten Ringwulst (9) hinweg bewegt.

10. Rohr- oder Schlauchanschluss nach Anspruch 9, **dadurch gekennzeichnet, dass** der erste oder der zweite umlaufende Ringwulst (19) entlang von einer zur Längsmittelachse (5, 11) des Rohrstutzens (2) und/oder des Rohr- oder Schlauchendes (3) geneigten Ebene (E3) verläuft.

11. Rohr- oder Schlauchanschluss nach Anspruch 9, **dadurch gekennzeichnet, dass** der erste oder der zweite umlaufende Ringwulst (19) einen wellenförmigen Verlauf besitzt und eine zur Längsmittelachse (5, 11) des Rohrstutzens (2) und/oder des Rohr- oder Schlauchendes (3) senkrechte Ebene (E2) an mindestens vier Stellen kreuzt.

12. Rohr- oder Schlauchanschluss nach einem der Ansprüche 9 bis 11, **dadurch gekennzeichnet, dass** der erste umlaufende Ringwulst (19) eine zur Längsmittelachse (11) des Rohr- oder Schlauchendes (3) senkrechte Ebene (E2) an mindestens zwei Stellen kreuzt und dass der zweite umlaufende Ringwulst (9) entlang von einer zur Längsmittelachse (5) des Rohrstutzens (2) senkrechten Ebene (E1) verläuft.

13. Rohr- oder Schlauchanschluss nach Anspruch 12, **dadurch gekennzeichnet, dass** der erste umlaufende Ringwulst (19) eine Längsmittelebene (E2) der Schelle (4) und/oder eines Schellensitzes (15) an mindestens zwei Stellen kreuzt.

14. Rohr- oder Schlauchanschluss nach einem der Ansprüche 9 bis 13, **dadurch gekennzeichnet, dass** das Rohr- oder Schlauchende (3) Teil eines Ansaug- oder Ladeluftschlauchs eines Ansaugtrakts einer Brennkraftmaschine ist und dass der Rohrstutzen (2) Teil eines anderen Bauteils des Ansaugtrakts der Brennkraftmaschine ist.

## Claims

1. Air pipe or air hose, in particular, for an intake tract of an internal combustion engine, with a pipe or hose end (3) for attachment to a pipe socket (2) and with a clamp seat (15) for a clamp (4) serving to attach the pipe or hose end (3) to the pipe socket (2), wherein the pipe or hose end (3) radially inward from the clamp seat (15) has an inwardly projecting peripheral annular ring (19), whose width is less than the width of the clamp seat (15) and is integrally formed on an inner periphery of the pipe or hose end (3), **characterized in that** the annular ring (19) crosses the longitudinal central plane (E2) of the clamp seat (15) perpendicular to the longitudinal central axis (11) of the pipe or hose end (3) in at least two places.

2. Air pipe or air hose according to claim 1, **characterized in that** the pipe or hose end (3) before the clamp seat (15) has a cross-sectional enlargement (13) diverging towards its free end.

3. Air pipe or air hose according to one of the preceding claims, **characterized in that** the pipe or hose end (3) has a cross-sectional constriction (17) behind the clamp seat (15).

4. Air pipe or air hose according to one of the preceding claims, **characterized in that** the pipe or hose end (3) has a cross-sectional enlargement (16) behind the clamp seat (15).

5. Air pipe or air hose according to one of the preceding claims, **characterized in that** the cross-sectional constriction (17) is arranged behind the cross-sectional enlargement (16).

6. Air tube or air hose according to one of the preceding claims, **characterized in that** it is produced by blow-moulding from plastic and has a generally constant wall thickness.

7. Air pipe or air hose according to one of the preceding claims, **characterized in that** the pipe or hose end (3) has a cross-sectional enlargement on both sides of the clamp seat (15).

8. A component with a pipe socket (2) for plugging on a pipe or hose end (3) of an air pipe or air hose, in particular, for an intake tract of an internal combustion engine, wherein the pipe socket (2) has at least one outwardly projecting peripheral annular ring, which is integrally formed at a free end of the pipe socket (2), **characterized in that** the annular ring crosses a longitudinal central plane (E2) perpendicular to the longitudinal central axis (5) of the pipe socket (2) in at least two places.

9. A pipe or hose connection (1) with a pipe socket (2), a pipe or hose end (3) plugged externally onto the pipe socket (2) and a clamp (4) holding the pipe or hose end (3) on the pipe socket (2), wherein the pipe or hose end (3) radially inward from the clamp (4) has an inwardly protruding peripheral first annular ring (19), whose width is smaller than the width of the clamp (4) and is integrally formed on an inner periphery of the pipe or hose end (3), and wherein the pipe socket (2) has at least an outwardly projecting encircling second annular ring (9), over which the first annular ring (19) on attaching the pipe or hose end (3) moves along the pipe socket (2), and is integrally formed at a free end of the pipe socket (2), **characterized in that** one of the first and second peripheral annular rings (9, 19) runs along a perpendicular plane (E1) to a central longitudinal axis (5, 11) of the pipe socket (2) and/or the pipe or hose end (3), and that the other of the first and second peripheral annular rings (9, 19) crosses a perpendicular plane (E2) to the central longitudinal axis (5, 11) of the pipe socket (2) and/or the pipe or hose end (3) in at least two places, so that the two rings (9, 19) do not simultaneously come in contact along its entire length, when the first annular ring (19) is moved along on insertion of the pipe or hose end (3) onto the pipe socket (29 via the second annular ring (9).

10. Pipe or hose connection according to claim 9, **characterized in that** the first or the second peripheral annular ring (19) runs along an inclined plane (E3) to a central longitudinal axis (5, 11) of the pipe socket (2) and/or the pipe or hose end (3).

11. Pipe or hose connection according to claim 9, **characterized in that** the first or the second peripheral annular ring (19) has an undulating course and crosses a perpendicular plane '(E2) to a central longitudinal axis (5, 11) of the pipe socket (2) and/or the pipe or hose end (3) in at least four places.

12. A pipe or hose connection according to one of claims 9 to 11, **characterized in that** the first peripheral annular ring (19) crosses a perpendicular plane (E2) to a central longitudinal axis (11) of the pipe or hose end (3) in at least two places, and that the second peripheral annular ring (9) runs along a perpendicular plane (E1) to a central longitudinal axis (5) of the pipe socket (2).

13. Pipe or hose connection according to claim 12, **characterized in that** the first peripheral annular ring (19) crosses a longitudinal central plane (E2) of the clamp (4) and/or a clamp seat (15) in at least two places.

14. Pipe or hose connection according to one of claims 9 to 13, **characterized in that** the pipe or hose end (3) is part of an intake or charging air hose of an intake tract of an internal combustion engine and that the pipe socket (2) is part of another component of the intake tract of the internal combustion engine.

## Revendications

1. Tube d'air ou tuyau d'air, notamment pour une voie d'admission d'un moteur à combustion interne, avec une extrémité de tube ou de tuyau (3) destinée à être emboîtée sur un embout de tuyau (2) et avec un logement de bride (15) destiné à une bride (4) servant à la fixation de l'extrémité de tube ou de tuyau (3) sur l'embout de tube (2), l'éxtrémité de tube ou de tuyau (3) comportant de façon radiale vers l'intérieur par rapport au logement de bride (15) un tore (19) circonférentiel qui dépasse vers l'intérieur et dont la largeur est inférieure à la largeur du logement de bride (15) et qui est formé d'une seule pièce sur une circonférence intérieure de l'extrémité de tube ou de tuyau (3), **caractérisé en ce que** le tore (19) croise en au moins deux points un plan médian longitudinal (E2), perpendiculaire à l'axe médian longitudinal (11) de l'extrémité de tube ou de tuyau (3), du logement de bride (15).

2. Tube d'air ou tuyau d'air selon la revendication 1, **caractérisé en ce que** l'extrémité de tube ou de tuyau (3) comporte, devant le logement de bride (15), un élargissement de section transversale (13) qui diverge en direction de son extrémité libre.

3. Tube d'air ou tuyau d'air selon l'une des revendications précédentes, **caractérisé en ce que** l'extrémité de tube ou de tuyau (3) comporte, derrière le logement de bride (15), un rétrécissement de section transversale (17).

4. Tube d'air ou tuyau d'air selon l'une des revendications précédentes, **caractérisé en ce que** l'extrémité de tube ou de tuyau (3) comporte, derrière le logement de bride (15), un élargissement de section transversale (16).

5. Tube d'air ou tuyau d'air selon l'une des revendications précédentes, **caractérisé en ce que** le rétrécissement de section transversale (17) est agencé derrière l'élargissement de section transversale (16).

6. Tube d'air ou tuyau d'air selon l'une des revendications précédentes, **caractérisé en ce qu'**il est fabriqué en matière plastique par soufflage sur matrice et qu'il a une épaisseur de paroi généralement constante.

7. Tube d'air ou tuyau d'air selon l'une des revendications précédentes, **caractérisé en ce que** l'extrémité de tube ou de tuyau (3) a, des deux côtés du logement de bride (15), une section transversale élargie.

8. Élément avec un embout de tube (2) pour l'emboîtage d'une extrémité de tube ou de tuyau (3) d'un tube d'air ou tuyau d'air, notamment pour une voie d'admission d'un moteur à combustion interne, l'embout de tube (2) comportant au moins un tore circonférentiel qui dépasse vers l'extérieur et qui est formé d'une seule pièce sur une extrémité libre de l'embout de tube (2), **caractérisé en ce que** le tore croise en au moins deux points un plan médian longitudinal (E2), perpendiculaire à l'axe médian longitudinal (5) de l'embout de tube (2).

9. Raccord de tube ou de tuyau (1), avec un embout de tube (2), avec une extrémité de tube ou de tuyau (3) emboîtée sur l'embout de tube (2) et avec une bride (4) maintenant l'extrémité de tube ou de tuyau (3) sur l'embout de tube (2), l'extrémité de tube ou de tuyau (3) comportant de façon radiale vers l'intérieur par rapport à la bride (4) un premier tore (19) circonférentiel qui dépasse vers l'intérieur et dont la largeur est inférieure à la largeur de la bride (4) et qui est formé d'une seule pièce sur une circonférence intérieure de l'extrémité de tube ou de tuyau (3) et l'embout de tube (2) comportant au moins un deuxième tore (9) circonférentiel qui dépasse vers l'extérieur et par l'intermédiaire duquel le premier tore (19) lors de l'emboîtage de l'extrémité de tube ou de tuyau (3) sur l'embout de tube (2) s'éloigne et qui est formé d'une seule pièce sur une extrémité libre de l'embout, de tube (2), **caractérisé en ce que** l'un des tores circonférentiels (9, 19), le premier ou le deuxième, s'étend le long d'un plan (E1) perpendiculaire à un axe médian longitudinal (5, 11) de l'embout de tube (2) et/ou de l'extrémité de tube ou de tuyau (3) et **en ce que** l'autre tore circonférentiel (9, 19), le premier ou le deuxième, croise en au moins deux points un plan (E2) perpendiculaire à l'axe médian longitudinal (5, 11) de l'embout de tube (2) et/ou de l'extrémité de tube ou de tuyau (3) de telle sorte que les deux tores (9, 19) n'entrent pas simultanément en contact sur toute leur longueur lorsque le premier tore (19) lors de l'emboîtage de l'extrémité de tube ou de tuyau (3) sur l'embout de tube (2) s'éloigne au-delà du deuxième tore (9).

10. Raccord de tube ou de tuyau selon la revendication 9, **caractérisé en ce que** le premier ou le deuxième tore circonférentiel (19) s'étend le long d'un plan (E3) incliné par rapport à l'axe médian longitudinal (5, 11) de l'embout de tube (2) et/ou de l'extrémité de tube ou de tuyau (3).

11. Raccord de tube ou de tuyau selon la revendication 9, **caractérisé en ce que** le premier ou le deuxième tore circonférentiel (19) a une forme d'onde et croise en au moins quatre points un plan (E2) perpendiculaire à l'axe médian longitudinal (5, 11) de l'embout de tube (2) et/ou de l'extrémité de tube ou de tuyau (3).

12. Raccord de tube ou de tuyau selon l'une des revendications 9 à 11, **caractérisé en ce que** le premier tore circonférentiel (19) croise en au moins deux points un plan (E2) perpendiculaire à l'axe médian longitudinal (11) de l'extrémité de tube ou de tuyau (3) et **en ce que** le deuxième tore circonférentiel (9) s'étend le long d'un plan (E1) perpendiculaire à l'axe médian longitudinal (5) de l'embout de tube (2).

13. Raccord de tube ou de tuyau selon la revendication 12, **caractérisé en ce que** le premier tore circonférentiel (19) croise en au moins deux points un plan médian longitudinal (E2) de la bride (4) et/ou d'un logement de bride (15).

14. Raccord de tube ou de tuyau selon l'une des revendications 9 à 13, **caractérisé en ce que** l'extrémité de tube ou de tuyau (3) fait partie d'un tuyau d'admission ou d'air de suralimentation d'une voie d'admission d'un moteur à combustion interne et **en ce que** l'embout de tube (2) fait partie d'un autre élément de la voie d'admission du moteur à combustion interne.
